# DEMANDE DE BREVET EUROPEEN

(11) **EP 1 712 804 A1**
(43) Date de publication de la demande: **18.10.2006**
(21) Numéro de dépôt: 06290585.6
(22) Date de dépôt: 11.04.2006
(51) Int. Cl.: F16B 41/00, F16B 37/04, F16B 37/02

(54) **Dispositif de maintien de position de moyens en forme de vis**

(30) Priorité: 13.04.2005 FR 0503699
(71) Demandeur: Attax, 75116 Paris (FR)
(72) Inventeur: de Azevedo, Helder, 28700 Sainville (FR); Dubost, Dominique, 78170 La Celle St Cloud (FR)
(74) Mandataire: Habasque, Etienne J. Jean-François

(57) **Abrégé**

Ce dispositif de maintien en position de moyens en forme de vis (1) dans un trou de passage (2) d'une première pièce (3) en vue de sa fixation par serrage sur une seconde pièce, est caractérisé en ce qu'il comporte une languette (4) réalisée d'une seule pièce et comportant une partie centrale munie d'un trou taraudé (5) de réception des moyens en forme de vis (1) et de part et d'autre de laquelle s'étendent deux ailes élastiques (6, 7) destinées à s'engager avec jeu dans des lumières (8, 9) de la première pièce pour permettre un maintien avec jeu des moyens en forme de vis en position dans le trou (2) de cette première pièce.

## Description

La présente invention concerne un dispositif de maintien en position de moyens en forme de vis.

Plus particulièrement l'invention se rapporte à un dispositif de maintien en position de moyens en forme de vis dans un trou de passage d'une première pièce en vue de sa fixation par serrage sur une seconde pièce.

De tels dispositifs peuvent trouver de nombreuses applications, par exemple dans le domaine de l'industrie automobile ou autre.

On sait en effet que lorsque deux pièces doivent être serrées l'une contre l'autre à l'aide par exemple d'une vis, il convient dans un premier temps d'engager et de maintenir la vis en position avant de la serrer.

Cependant, il peut arriver pour une raison ou pour une autre, par exemple pour des problèmes d'accessibilité, que ce maintien en position des moyens en forme de vis, par exemple par un opérateur de montage, soit extrêmement difficile.

On a alors développé dans l'état de la technique des dispositifs de maintien pour ce type d'organes tels que par exemple des vis ou des écrous.

Ces organes, appelés organes transfert, permettent de bloquer en position la vis ou l'écrou dans le trou correspondant de la première pièce.

Le problème est que la vis par exemple est alors bloquée en position et absorbe très difficilement des écarts de centrage par rapport à l'autre pièce.

Le but de l'invention est donc de résoudre ces problèmes.

A cet effet l'invention a pour objet un dispositif de maintien en position de moyens en forme de vis dans un trou de passage d'une première pièce en vue de sa fixation par serrage sur une seconde pièce, caractérisé en ce qu'il comporte une languette réalisée d'une seule pièce et comportant une partie centrale munie d'un trou taraudé de réception des moyens en forme de vis et de part et d'autre de laquelle s'étendent deux ailes élastiques destinées à s'engager avec jeu dans des lumières de la première pièce pour permettre un maintien avec jeu des moyens en forme de vis en position dans le trou de cette première pièce.

Suivant d'autres caractéristiques conformes à l'invention :
- le trou taraudé de la partie centrale de la languette est ménagé dans un bossage de celle-ci ;
- les ailes latérales de la languette comportent des portions coudées ;
- les lumières de la première pièce sont ménagées dans une portion de voile de celle-ci ;
- les ailes latérales de la languette sont diamétralement opposées ; et
- la languette est réalisée par découpe et déformation d'un flan de tôle.

L'invention sera mieux comprise à l'aide de la description qui va suivre, donnée uniquement à titre d'exemple et faite en se référant aux dessins annexés, sur lesquels :
- la Fig. 1 représente une vue en coupe d'un dispositif de maintien en position, monté dans une pièce, et
- la Fig. 2 représente une vue en perspective d'une languette entrant dans la constitution d'un tel dispositif.

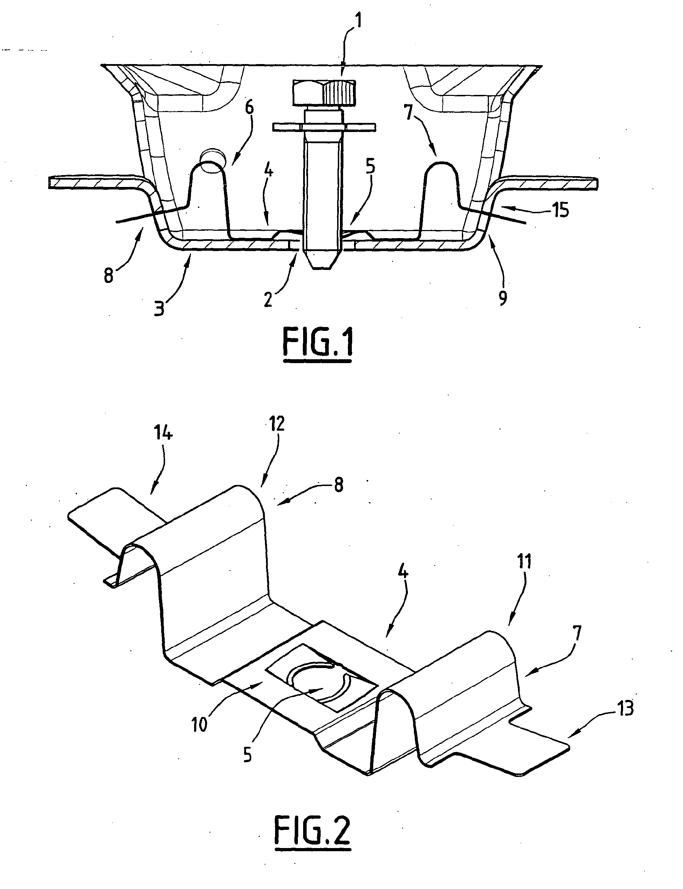

On a en effet illustré sur ces figures, un dispositif de maintien en position de moyens en forme de vis désignés par exemple par la référence générale 1 sur la figure 1, dans un trou de passage désigné par exemple par la référence générale 2, d'une première pièce désignée par la référence générale 3, destinée à être fixée par serrage sur une seconde pièce non représentée sur cette figure 1.

En fait, et comme cela est illustré, ce dispositif de maintien comporte une languette désignée par la référence générale 4, réalisée d'une seule pièce, par exemple par découpe et déformation d'un flan de tôle.

Cette languette 4 comporte alors une partie centrale munie d'un trou taraudé désigné par la référence générale 5 de réception des moyens en forme de vis, de part et d'autre de laquelle s'étendent des ailes élastiques 6 et 7.

Les extrémités de ces ailes élastiques sont destinées à s'engager avec jeu dans des lumières correspondantes, par exemple 8 et 9, de la première pièce 3.

Ceci permet alors de maintenir avec jeu les moyens en forme de vis 1 en position dans le trou 2 de la première pièce, ce qui permet à l'ensemble moyens de vissage plus languette de se déplacer par rapport à cette première pièce et au trou de passage de celle-ci, afin d'absorber un éventuel écart de centrage de la deuxième pièce, et plus particulièrement d'un écrou ou d'une portion taraudée de celle-ci.

Ainsi, des jeux en X et Y entre les pièces au moment de leur assemblage peuvent être absorbés.

Dans l'exemple de réalisation illustré sur ces figures, et comme cela est visible plus particulièrement sur la figue 2, le trou taraudé 5 de la languette peut être réalisé dans un bossage 10 de la partie centrale de la languette 4 tandis que les ailes latérales élastiques 7, 8 de cette languette peuvent comporter chacune une portion coudée désignée par les références générales 11 et 12 sur la figure 2 et une portion d'extrémité de section réduite, respectivement 13 et 14, facilitant l'introduction de celles-ci dans les lumières 8 et 9 de la première pièce.

Les ailes latérales, dans l'exemple de réalisation illustré, sont diamétralement opposées et les lumières 8 et 9 de la première pièce peuvent par exemple être réalisées dans une portion en forme de voile 15 de celle-ci.

Bien entendu, d'autres modes de réalisation encore peuvent être envisagés.

## Revendications

1. Dispositif de maintien en position de moyens en forme de vis (1) dans un trou de passage (2) d'une première pièce (3) en vue de sa fixation par serrage sur une seconde pièce, **caractérisé en ce qu'**il comporte une languette (4) réalisée d'une seule pièce et comportant une partie centrale munie d'un trou taraudé (5) de réception des moyens en forme de vis (1) et de part et d'autre de laquelle s'étendent deux ailes élastiques (6, 7) destinées à s'engager avec jeu dans des lumières (8, 9) de la première pièce pour permettre un maintien avec jeu des moyens en forme de vis en position dans le trou (2) de cette première pièce.

2. Dispositif de maintien selon la revendication 1, **caractérisé en ce que** le trou taraudé (5) de la partie centrale de la languette est ménagé dans un bossage (10) de celle-ci.

3. Dispositif de maintien selon la revendication 1 ou 2, **caractérisé en ce que** les ailes latérales (6, 7) de la languette comportent des portions coudées (11, 12).

4. Dispositif de maintien selon l'une quelconque des revendications précédentes, **caractérisé en ce que** les lumières (8, 9) de la première pièce sont ménagées dans une portion de voile (15) de celle-ci.

5. Dispositif de maintien selon l'une quelconque des revendications précédentes, **caractérisé en ce que** les ailes latérales (6, 7) de la languette sont diamétralement opposées.

6. Dispositif de maintien selon l'une quelconque des revendications précédentes, **caractérisé en ce que** la languette est réalisée par découpe et déformation d'un flan de tôle.
